# EUROPEAN PATENT SPECIFICATION

(11) **EP 4 185 233 B1**
(45) Date of publication and mention of the grant of the patent: **13.11.2024**
(21) Application number: 21778580.7
(22) Date of filing: 16.07.2021
(51) Int. Cl.: A61C 7/08, A61C 7/36, A61C 7/10

(54) **AN ORTHODONTIC DEVICE FOR CRANIAL ADAPTATIONS**
ORTHODONTISCHE VORRICHTUNG FÜR SCHÄDELANPASSUNGEN
DISPOSITIF ORTHODONTIQUE POUR ADAPTATIONS CRÂNIENNES

(30) Priority: 24.07.2020 IT 202000018034
(43) Date of publication of application: 31.05.2023
(73) Proprietor: Biomax S.p.a., 36100 Vicenza (VI) (IT); Gruppo Europeo di Ortodonzia S.r.l., 00173 Roma (RM) (IT); OP S.r.l., 42122 Reggio Emilia (IT)
(72) Inventor: CARRAFIELLO, Alessandro, 42023 Cadelbosco Di Sopra (Reggio Emilia) (IT)
(86) International application number: PCT/IT2021/000037
(87) International publication number: WO 2022/018773

(56) References cited:
- WO-A1-2014/012827
- CN-A- 110 025 388
- US-A1- 2017 325 913
- US-A1- 2020 093 571

## Description

### Technical field

The present invention refers to a combination of an aligner with an orthodontic device for cranial adaptations which is particularly suitable to obtain precise dental positioning and is of a perfectly acceptable size in terms of interpersonal relationships and to be used in conjunction with aligners, following a specific use protocol.

### Background Art

As is known, a dental brace is a medical device used by an orthodontist (the dentist which specialises in this type of treatment) to align the patient's teeth in order to ensure correct chewing, better oral hygiene, and improved dental aesthetics.

Dental braces are used to solve and/or prevent a series of problems related to dentition, such as treating misalignments by moving the teeth in the desired direction according to orthodontics.

In particular, a dental brace is a medical device that is installed to straighten crooked or overlapping teeth, to widen or narrow the palate, or to correct malocclusion. By virtue of its numerous uses, there are many different types of brace, each one suited to the needs of each person, both during childhood and adulthood, and on which needs the length of use of the device also depends.

Known in the art are devices such as those disclosed in US2017325913, CN110025388, WO2014012827 and US2020093571.

The first braces designed for orthodontic purposes were created in the 1960s and had a horseshoe shape that formed an arch with an upwards-facing U-shaped section. These braces only embraced the upper arch and were made of natural rubber. These devices, illustrated in patents FR67616 and FR1 104897, delivered good results, especially in adolescents, but were later abandoned due to the poor dental positioning accuracy obtained compared to the metal "bracket" version, which was more precise.

Subsequently, a return was made to the idea of devices made of an elastic material. Some devices have a dental arch-shaped structure made in various sizes and featuring a double U-shaped section that can accommodate the teeth of both the upper and lower arches. In more detail, the aforesaid devices feature a vestibular shield, i.e. a flange that occupies the space between the teeth and the inside of the cheeks with an internal part that connects everything together, wherein the internal part occupies the space between the teeth and the tongue and therefore is shaped so as not to impair lingual movements and to guide the tongue into an upwards position itself.

The structure of the device described features slight construction variations according to the different types of malocclusions which the device is intended to remedy, wherein the thickness of the occlusal surface, of the vestibular flange, or of the internal part varies.

The devices described provide excellent input for correct growth of the constituent bones of the skull and mouth (maxillae and mandible), while also bringing benefits in terms of tooth positioning, especially in children and adolescents.

In the event, however, of teeth which are already in position, such as in adults or older adolescents, these devices do not ensure adequate precision regarding the position of individual teeth, as they are not designed to be anchored directly to the teeth, which means they are not the most suitable option for adults, also due to the fact that they need to be used for at least 14 hours a day, otherwise the desired results will not be obtained.

The aforesaid devices have various drawbacks, including inaccurate tooth positioning and a bulkiness that renders them incompatible with interpersonal relationships, due also to the fact that the clinical time needed to obtain even a minimal objective is long, i.e. approximately 36- 48 months in an adult.

Another problem that has emerged is that the results obtained in adults or in young people at the end of their growth are generally poor and lingual re-education is rather generic, and also difficult in adults, since the various internal parts, in practice, force the tongue to change
position without giving it any precise direction. Furthermore, in adults, memorisation of the new lingual and buccal muscle engrams is statistically ineffective if left to voluntary exercises alone.

Another problem encountered by the devices currently in use is due to the fact that they are generally used in conjunction with other orthodontic systems without the application of a specific protocol linked to a preestablished clinical goal.

In addition to the information above, the applicant is aware of Patent n.10201600044898, which describes an orthodontic device intended to be interposed between a user's upper dental arch and lower dental arch, comprising at least one arch-shaped channel to at least partially house a dental arch, the channel comprising at least one occlusal base intended to be positioned along the occlusal surface of the user and at least one wall projecting laterally to the occlusal base and intended to come into contact with the vestibular or palatal side of at least one of the user's teeth and characterised by the fact that the canal is made at least partially of a first material, wherein the first material is more elastically deformable than the second.

Nowadays, the need to take care of one's body and appearance is increasingly felt by people and one element which contributes to looking one's best is undoubtedly one's face and, in particular, one's mouth and teeth. Indeed, a well-cared-for mouth and a beautiful smile helps one attract the attention of those around you and makes you feel confident and more accepted within interpersonal relationships.

Indeed, when one is at talking distance from another person, the eyes and mouth are the physical features of a face that are most noticed and watched and contribute to the overall image of the speaker, beyond their purely external appearance. A tidy set of teeth is also synonymous with a good anatomical arrangement of the teeth and correct functional capacity in terms of chewing.

### Disclosure of Invention

The invention is as defined in the appended claims.

The object of the present invention is essentially to solve the problems of the commonly known technique by overcoming the drawbacks described above by means of an orthodontic device for cranial adaptations which can interact with aligners to obtain perfect dental alignment with optimal cranial adaptation.

A second object of the present invention is to provide an orthodontic device for cranial adaptations which can be customised according to the cranial arrangement of each individual despite being a mass-produced product and which has alternating flanges.

A third object of the present invention is to provide an orthodontic device for cranial adaptations which ensures very precise tooth positioning with compact overall dimensions so as not to limit or adversely affect users' interpersonal relationships.

Another object of the present invention is to provide an orthodontic device for cranial adaptations which delivers results in a short space of time in adults or in young people at the end of their growth.

Another object of the present invention is to provide an orthodontic device for cranial adaptations which can manage the functions of muscles such as the buccinator and the rear two-thirds of the tongue.

A further object of the present invention is to provide an orthodontic device for cranial adaptations which can guide and manage a patient's lingual re-education.

A further but not final object of the present invention is to provide an orthodontic device for cranial adaptations which is easy to make and works well.

These aims and others besides, which will better emerge over the course of the present description, are essentially achieved by means of an orthodontic device for cranial adaptations, as outlined in the claims below.

### Brief Description of Drawings

Further characteristics and advantages will better emerge in the detailed description of an orthodontic device for cranial adaptations according to the present invention, provided in the form of a non-limiting example, with reference to the accompanying drawings, in which:
- Figure 1 shows, schematically and from a rear view, an orthodontic device for cranial adaptations, combined with an aligner, in accordance with the present invention;
- Figure 2 shows, schematically and from a rear view, the orthodontic device in Figure 1;
- Figure 3 shows, schematically and from a front view, the orthodontic device in Figure 1;
- Figure 4 shows, schematically and from a side view, the orthodontic device in Figure 1;
- Figure 5 shows, schematically and from a bottom-up view, the orthodontic device in Figure 1;
- Figure 6 shows, schematically and from a bottom-up view, an aligner as shown in Figure 1;
- Figure 7 shows, schematically and from a top-down view, the aligner in Figure 6;
- Figure 8 shows, schematically and from a top-down view, a variant of the orthodontic device in question;
- Figure 9 shows, schematically and from a front view, the orthodontic device in Figure 8;
- Figure 10 shows, schematically and from a side view, the orthodontic device in Figure 8;
- Figure 11 shows, schematically and from a top-down view, a second variant of the orthodontic device according to the present invention;
- Figure 12 shows, schematically and from a bottom-up view, the orthodontic device in Figure 11;

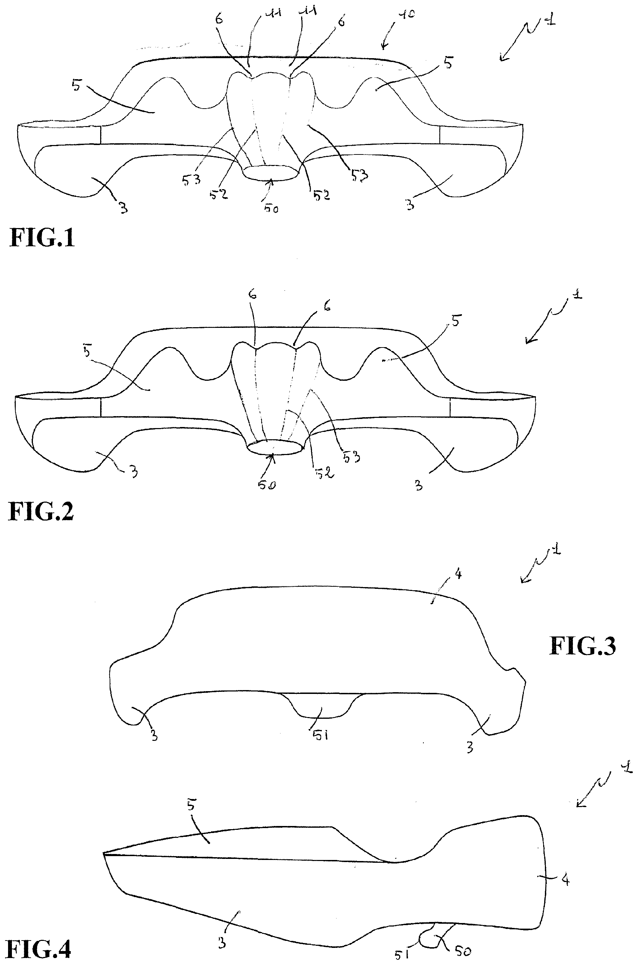

With reference to the figures, and in particular Figure 1, 1 denotes, as a whole, an orthodontic device for cranial adaptations according to the present invention.

### Best Mode for Carrying Out the Invention

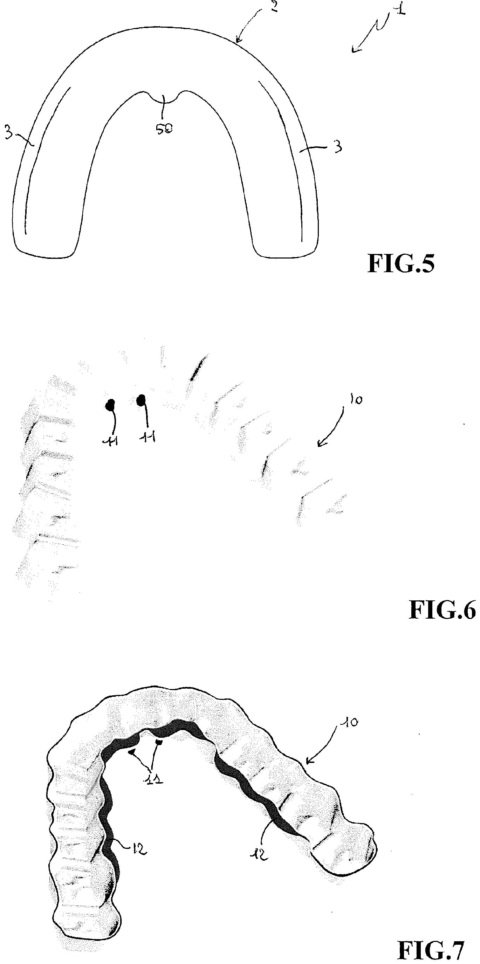

The orthodontic device for cranial adaptations 1 in question is envisaged to be allocated between the two dental arches of a patient and comprises a U-shaped element having an upper seat 2 to accommodate the dental arch involved in the treatment while on the opposite side a lower vestibular shield 3 is envisaged on both sides of the U which is envisaged to engage externally to the dental arch not involved in the treatment as shown in Figures 4 and 5. The device features a central front shield 4 arranged to rest against the incisors.

More specifically, it features the presence of alternating shields: the frontal one 4 and the palatal one 40 in the upper part and the vestibular ones 3 in the lower part, promote the expansion of the maxillae and allow control over the relationship with the lower arch for a correct transversal dimension between the maxillae and the mandible, as the expansion of the maxillae must be proportionate to the patient's cranial scheme and mandibular size.

The aforesaid configuration of the shields reinforces the pressure that the patient applies while contracting the musculature and, in particular, the palatal shields 40 allow to expand the maxillaries, widening the upper arch (indeed, in malocclusions, in 90% of cases, the upper arch is narrow) while, underneath, the vestibular shields 3 contain the lower arch. The vestibular shields 3 become very useful in the event of tooth cross situations, where two synchronous movements are necessary, i.e. an upper expansion movement and a lower contraction movement, since the teeth engage in the opposite way to the way they should, i.e. with a scissor movement.

According to the present embodiment, the device 1 features an upper lingual shield 5 located inside, at the centre of the U and equipped, centrally, with a lingual ramp 50 envisaged to ensure the tongue remains in a specific well-defined area, at the incisors, and delimited on
one side by the device and on the other by lingual pins 50 present in aligners 10, as better described later on.

More in detail, the lingual ramp 50 consists of a lower part 51, which is slightly curved towards the inside of the mouth, as shown in Figure 4, so as to guide the tongue upwards towards the small ribs 52, known as 'palatal rughae', located immediately behind the upper incisors, as shown in Figure 1. Furthermore, the lingual ramp features two vertical grooves 53, also visible in Figure 1, which guide the tongue along the path of elevation, but above all it ends with a conformation featuring an upper edge with a double recess 6, which forms a functional whole with the lingual pins 11 of the aligner 10 which the patient has to wear.

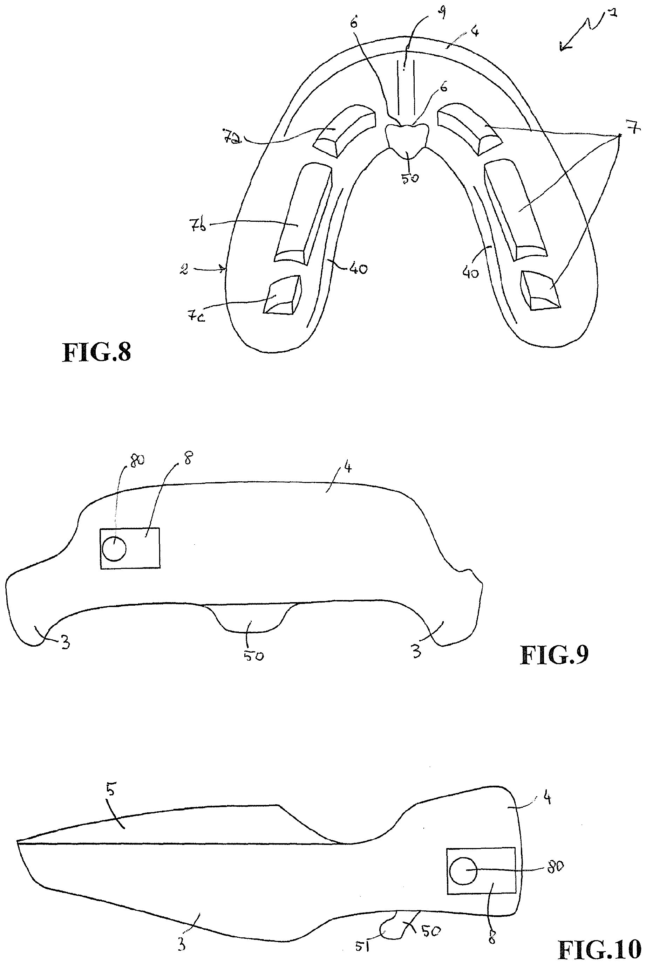

In accordance with the present invention, one variant, shown in Figures 8, 9, and 10, comprises, in addition to the elements described above, a series of inclined sectoral surfaces 7 located inside the seat 2 and positioned as follows: the first surface 7a in correspondence with the premolar teeth, the second surface 7b with the molar teeth, and the third surface 7c in proximity to the free end of the U.

These inclined surfaces protrude from the base of the seat 2 and have an essentially trapezoidal section with the side facing outwards, which is slightly arched, being designed to rest against the inside of the cheek.

The inclined sectoral surfaces 7a, 7b, and 7c are arranged in a predetermined and strategic way so as to be able to customise, case by case in a simple but effective way, the areas that will have to give strength to the dental and skeletal movements one intends to impart with the treatment.

According to the invention, an inclined surface on which the arches rest, applying force, during the tightening transmits an oriented force to the bone structures which house the roots. The particular arrangement of these inclined surfaces stimulates the expansion of the palate, but individual surfaces can be eliminated so that, by leaving only some of them in place, localised, customised expansion can be achieved, according to the needs of the clinical case. These inclined surfaces act in
combination with sectoral reinforcements 12 present in the aligners; a whole is therefore created in terms of the direction of the forces applied to reshape the palate and move the teeth. In addition to the information above, the inclined surfaces 7 are three on each side, as shown in Figure 8, and can be removed so that a highly customised functional device is achieved despite being a mass-produced device.

According to the present invention, the inclined sectoral surfaces 7 connect functionally to the anatomy of the palate at the sutures thereof, i.e. the sagittal, interincisal, and cruciform sutures. These aforesaid sutures form the basis of the design of the reinforcements 12 present in the aligners 10, which are arranged in the same layout, as shown in Figure 7. When the patient tightens the arches, the inclined surfaces 7 transmit the force to the aligner 10, which, with the sectoral reinforcements 12, acts on the mobility of certain sectors and pressure is exerted by the customised thicknesses 7, thereby obtaining a fully customised and effective treatment, tailored to each patient.

Furthermore, the device comprises a microchip pocket 8 made of an elastic material, the said pocket being obtained in the thickness of the said device and being envisaged to house a microchip 9 equipped with a thermal sensor which will ensure patient compliance and will provide useful data for monitoring the treatment, as shown in Figure 9.

In addition to the information above, the device features a median ridge 9 which ensures a precise engagement between the aligners 10 and the device 1.

In the present embodiment and as shown in Figure 8, the said crest 9 has a height of approximately 0.5-0.8 mm, so as not to alter the tooth-to-tooth contact but which is, in any case, sufficient to fit between the two central incisors, which generally have a groove therebetween at the incisal edge.

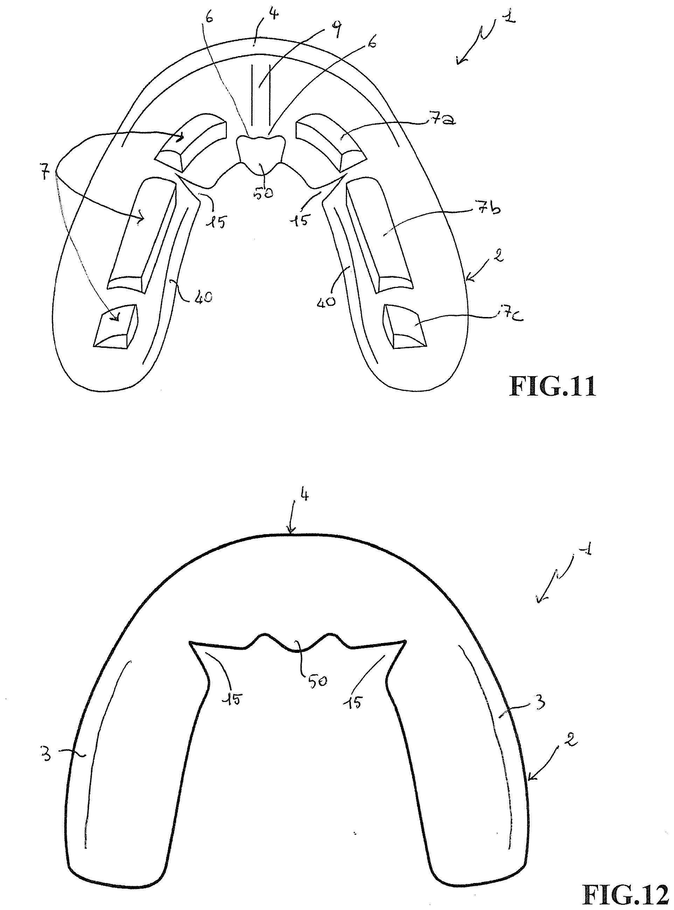

Also in accordance with the present invention and as shown in Figures 11 and 12, the device features at least a pair of wedge-shaped adapter cuts 15 which allow a lateral movement
which widens the U, offering optimal dimensional adaptation in the transverse direction to the various different sized arches, making the size of the device practically "universal".

In particular, the constituent mixture of the device has a hardness which is specifically designed and calibrated to functionally re-educate the chewing and base skull muscles and allows complete, balanced muscle contraction, without being either overly soft or overly hard.

As described above, the orthodontic device according to the present invention envisages a first version shown in Figures 1 to 5 and a version, shown in Figures 8 to 11, featuring additional elements to ensure a more precise, more sophisticated customised treatment. Finally, the device with the adapter cuts is very flexible and can be adapted transversely to create any distance between the dental arches.

As mentioned earlier, the orthodontic device in question is intended to be combined with an aligner 10, shown in Figures 6 and 7. The aligner 10, which is of an essentially known type, has lingual pins 11 designed to engage in the connection recesses 6 present in the device. More specifically, the lingual pins 11 consist of small protrusions placed in a strategic position, i.e. behind and beside the interincisal papilla. The task of the lingual pins 11 is to guide, in combination with the lingual elevator 50 (which has the grooves 52 running in the same direction as the said pins), the tongue towards a physiological functional path. The tongue is thereby re-educated for the entire duration of the treatment, which can last from 12 to 24 months, because resting against the palate helps to reshape it correctly, with great benefits.

The lingual action has a palate-shaping action, which is implemented, thereby modifying the palate form.

The modification of the palate ensures better positioning of the teeth which, as housed in a wider and correctly shaped palate, can be moved more quickly and with greater ease.

Furthermore, the aligner 10 used in conjunction with the device has 12 individual sectoral reinforcements designed to stimulate skeletal adaptations.

In practice, the sectoral reinforcements 12 are enlargements/extensions made of the same material as the aligner and arranged according to the cranial sutures. Coupled with the orthodontic device in question, these enlargements/extensions ensure easy and physiological reshaping of the palate.

As already described, the orthodontic device 1, as shown in Figure 1, is designed to be combined with an aligner 10 according to a specific use protocol, i.e. it must be worn for at least 30 minutes each day, at the same time as the aligner, and the patient must tighten the arches for at least 30 minutes a day.

In practice, combined use of the orthodontic device and the aligner results in a treatment that combines the advantages of two - until now - separate treatment methods (one using sequential aligners and one using an elastic device), thereby shortening the time needed to achieve the pre-established clinical objective, since greater precision in tooth positioning can be achieved.

Furthermore, it is possible to achieve a skeletal adaptation of the underlying bones, which makes the result more stable over time and makes it possible to customise the treatment.

In particular, it helps to functionally re-educate the tongue with great effectiveness since the tongue is guided towards the palate and, above all, towards the lingual pins.

The orthodontic device 1, operating in conjunction with the aligner 10, allows precise, predetermined dental positioning to be obtained.

In particular, one specific digital design of the aligners coupled with the device promotes significant skeletal expansion even in adults and the treatment time is considerably reduced, with the desired clinical results achieved, in most cases, over a period ranging from 6 to 18 months.

Thus the present invention achieves the objects set.

The orthodontic device for cranial adaptations in question can interact with aligners to obtain perfect dental alignment with optimal cranial adaptation, unlike that which occurs with the systems according to commonly known technique, which envisages the two actions being performed individually.

Advantageously, the orthodontic device can be customised according to the skull pattern of each individual even though it is a mass-produced product.

Furthermore, the orthodontic device guarantees very precise dental positioning with a compact size, to limit and adversely affect users' interpersonal relationships.

Another advantage derives from the fact that the orthodontic device delivers results in a short space of time in adults, or in young people at the end of their growth.

Additionally, the orthodontic device can manage the functions of muscles such as the buccinator and the posterior two-thirds of the tongue, as well as guiding and managing the patient's lingual re-education through both upper palatal and lower vestibular shields.

A further advantage comes from the presence of the inclined sectoral surfaces 7 positioned on the upper occlusal part of the device, which allow customisation according to the individual cranial arrangement and are also integrated with the design of the aligners. These are elements are entirely lacking in the devices according to the commonly know technique. A further but not final advantage of the present invention is that the said system proves to be remarkably easy to use and structurally simple, and works well.

Naturally, further modifications or variants may be applied to the present invention while remaining within the scope of the invention as defined by the claims.

## Claims

1. A combination of an orthodontic device for cranial adaptations and an aligner to operate in combination with said orthodontic device, wherein the orthodontic device is envisaged to be allocated between a patient's two dental arches and comprising:
- a U-shaped element with a seat (2) on the top thereof to accommodate the dental arch concerned by the treatment,
- on the side opposite the seat (2) on each side of the U, a lower vestibular shield (3) envisaged to engage externally with the dental arch not concerned by the treatment and envisaged to contain the lower arch,
- centrally, a front shield (4) arranged to rest against the incisor teeth, **characterised by** the fact that the said device comprises:
- a palatal shield (40) on the top thereof, on each side of the U, to strengthen the pressure which the patient applies while contracting the musculature and to allow the maxillae to expand, thereby widening the upper arch,
- an upper lingual shield (5) located inside, at the centre of the U and equipped, centrally, with a lingual ramp (50) envisaged to ensure the tongue remains in a specific well-defined area, at the incisor teeth, and delimited on one side by the device and on the other by lingual pins (11) present in the aligner (10) which the patient must wear,
- a median crest (9) which allows precise engagement between the aligner (10) and the said device,
- a series of inclined sectoral surfaces (7) located inside the seat (2) and situated, respectively, at the premolar teeth as regards the first surface (7a) and the molar teeth the second surface (7b), while the third surface (7c) is envisaged near the free end of the U, the said inclined surfaces protruding from the base of the seat (2) and having an essentially trapezoidal section with the slightly arched side facing outwards being arranged to rest against the inside of the cheek, there being three inclined surfaces (7) on each side, which can be removed individually to obtain a highly customisable functional device.

2. The combination according to Claim 1, **characterised by** the fact that the said device comprises at least a pair of wedge-shaped adapter cuts (15) which allow a lateral movement which widens the U, offering optimal dimensional adaptation in the transverse direction to the various different sized arches, making the size of the device practically "universal".

3. The combination according to Claim 1, **characterised by** the fact that the said device comprises a microchip pocket (8) made of an elastic material, the said pocket being obtained in the thickness of the said device and being envisaged to house a microchip (80) equipped with a thermal sensor which will ensure patient compliance and will provide useful data for monitoring the treatment.

4. The combination according to Claim 1, **characterised by** the fact that the said lingual ramp (50) has:
- a lower part (51) which curves slightly towards the inside of the mouth so as to guide the tongue upwards,
- small ribs (52), termed palatal wrinkles, which are located at the upper incisors,
- two vertical grooves (53) designed to guide the tongue elevation path, and
- an upper margin having a double hollow conformation (6) provided to interact with the lingual pins (11) on the aligner (10).

5. The combination according to Claim 1, **characterised by** the fact that the said sectoral inclined surfaces (7a, 7b and 7c) are arranged in a predetermined, strategic way so as to be able to customise, on a case by case basis, the areas where strength must be given to the dental and skeletal movements you wish to achieve during the treatment since an inclined surface on which the arches rest strongly during clamping transmits a force oriented towards the bone structures housing the roots so as to stimulate the expansion of the palate, but the said inclined surfaces can be removed individually, with the result that leaving only a few induces localised and individualised expansion, according to the needs of the clinical case.

6. The combination according to Claim 1, **characterised by** the fact that the said inclined surfaces (7a, 7b and 7c) act in conjunction with sectoral reinforcements (12) present in the aligners, creating a whole as regards the direction of the forces leading to the reshaping of the palate and dental displacement.

7. The combination according to Claim 1, **characterised by** the fact that the said sectoral inclined surfaces (7) connect functionally with the anatomy of the palate at the sutures thereof: namely sagittal, interincisive and cruciform sutures, and the said sutures correspond to the reinforcements (12) present in the aligners (10), which are arranged in the same layout so, when the patient tightens the arches, the inclined surfaces (7) transmit the force to the aligner (10), which interacts, through the sectoral reinforcements (12), with the mobility of certain sectors and receives pressure from the surfaces (7) thereby achieving an absolutely individual and effective treatment, which is managed in a customised way for each patient.

8. The combination according to Claim 1, **characterised by** the fact that the said crest (9) has a height of approximately 0.5-0.8 mm so as not to alter the dental contact but which is, in any case, sufficient to fit between the two central incisors, which generally have a groove therebetween at the incisal edge.

9. The combination according to Claim 1, **characterised by** the fact that the constituent mixture of the device has a hardness which is specifically designed and calibrated to functionally re-educate the chewing and base skull muscles and allows complete, balanced muscle contraction, without being either overly soft or overly hard.

10. The combination according to Claim 1, **characterised by** the fact that the said aligner (10) features:
- lingual pins (11) envisaged to engage with the connection grooves (6) present in the device and the said lingual pins (11) consist of small outwards protrusions situated in a predetermined position, i.e. behind and laterally to the interincisive papilla whose task is to guide - in combination with the lingual elevator (50) whose grooves (52) are aimed at the said pins - the tongue towards a physiological functional path so as to re-educate the tongue for the entire duration of the treatment, which can last from 12 to 24 months, because when resting on the palate it contributes to reshaping the palate since the lingual action exerts a shaping action against the palate, which changes the palatal form
- sectoral reinforcements (12), which are enlargements/extensions made with the same material as the aligner, are arranged according to the cranial sutures and are envisaged to stimulate skeletal adaptations allowing - in association with the orthodontic device - an easy, physiological re-shaping of the palate form.

11. The combination according to Claim 1, **characterised by** the fact that the said shields, both frontal (4) and palatal (40) in the upper part and vestibular (3) in the lower part, promote the expansion of the maxillae and allow control over the relationship with the lower arch for a correct transversal dimension between the maxillae and the mandible, as the expansion of the maxillae must be proportionate to the patient's cranial scheme and mandibular size, while the lower vestibular shields (3) allow the lower arch to be contained.

## Patentansprüche

1. Kombination aus einer orthodontischen Vorrichtung für kraniale Anpassungen und einem Ausrichter für das Arbeiten in Kombination mit dem genannten orthodontischen Gerät, wobei das orthodontische Gerät zur Positionierung zwischen zwei Zahnbögen eines Patienten vorgesehen ist und umfasst:
- ein U-förmiges Element mit einer Vertiefung (2) auf der Oberseite zur Aufnahme des behandelten Zahnbogens,
- auf der gegenüberliegenden Seite der Vertiefung (2) auf jeder Seite des U-förmigen Elements ein unterer Vestibulärschutz (3), der dazu vorgesehen ist, von außen an dem nicht von der Behandlung betroffenen Zahnbogen zu haften, um den unteren Zahnbogen aufzunehmen,
- mittig einen frontalen Schutz (4), der dazu dient, an den Schneidezähnen anzuliegen,
**dadurch gekennzeichnet, dass** diese Vorrichtung umfasst:
- einen Gaumenschutz (40) im oberen Teil auf jeder Seite des U-förmigen Elements, der dazu dient, den Druck zu verstärken, den der Patient beim Anspannen der Muskeln ausübt, und eine Ausdehnung des Kiefers zu ermöglichen, wodurch der obere Zahnbogen erweitert wird,
- einen oberen Zungenschutz (5), der innen in der Mitte des U-förmigen Elements angebracht und mittig über eine Zungenrampe (50) verfügt, die dazu dient, die Zunge dazu zu bringen, in einem bestimmten, genau definierten Bereich an den Schneidezähnen zu bleiben und auf der einen Seite durch die Vorrichtung und auf der anderen durch Zungenstifte (11) begrenzt ist, die im Ausrichter (10) vorhanden sind, den der Patient anlegen muss,
- eine Mittelrippe (9), die eine genaue Verbindung zwischen dem Ausrichter (10) und der Vorrichtung ermöglicht,
- eine Reihe bereichsweise geneigter Ebenen (7), die sich innerhalb der Vertiefung (2) befinden und entsprechend den prämolaren Zähnen für die erste Ebene (7a), den Backenzähnen für die zweite Ebene (7b) und der dritten Ebene (7c) angeordnet sind, ist in der Nähe des freien Endes des U-förmigen Elements vorgesehen, wobei die genannten geneigten Ebenen aus dem Boden der Vertiefung (2) herausragen und einen im Wesentlichen trapezförmigen Querschnitt aufweisen, wobei die leicht gewölbte Seite nach außen weist und so gestaltet ist, dass sie am inneren Teil der Wange anliegt, während die geneigten Ebenen (7), von denen drei auf jeder Seite vorhanden sind, einzeln entfernbar sind, um eine besonders anpassungsfähige Vorrichtung zu erzielen.

2. Kombination gemäß Patentanspruch 1, **dadurch gekennzeichnet, dass** die Vorrichtung mindestens ein Paar Adapterschnitte (15) mit keilförmigem Querschnitt umfasst, die eine seitliche Bewegung bei der Aufweitung des U-förmigen Elements ermöglichen und so eine optimale Maßanpassung in Querrichtung für die verschiedenen Zahnbögen unterschiedlicher Größe bieten, um die Abmessung der Vorrichtung praktisch "universell" zu machen.

3. Kombination gemäß Patentanspruch 1, **dadurch gekennzeichnet, dass** die genannte Vorrichtung eine Chiphaltertasche (8) aus elastischem Material umfasst, die in der Stärke der Vorrichtung hergestellt ist und dazu bestimmt ist, einen Mikrochip (80) aufzunehmen, der mit einem
Wärmesensor ausgestattet ist, der die Mitwirkung des Patienten ermöglicht sowie nützliche Daten zur Überwachung der Behandlung liefert.

4. Kombination gemäß Patentanspruch 1, **dadurch gekennzeichnet, dass** die Zungenrampe (50) aufweist:
- einen leicht zum inneren Teil des Mundes gekrümmten unteren Teil (51), so dass ein Heben der Zunge veranlasst wird,
- kleine Rippen (52), die als Gaumenfalten bezeichnet werden und sich an den oberen Schneidezähnen befinden,
- zwei vertikale Nuten (53), die dazu dienen, die Zunge beim Heben zu führen, und
- ein oberer Rand mit einer doppelten Aussparung (6), die mit den Zungenstiften (11) des Ausrichters (10) zusammenwirkt.

5. Kombination gemäß Patentanspruch 1, **dadurch gekennzeichnet, dass** die bereichsweisen geneigten Ebenen (7a, 7b und 7c) auf eine vorab festgelegte und strategische Weise angeordnet sind, um von Fall zu Fall die erforderlichen Bereiche individuell anpassen zu können, die bei der Behandlung den hervorgerufenen Zahn- und Skelettbewegungen Kraft verleihen, da eine geneigte Ebene, auf der die Zahnbögen beim Zusammenpressen kraftvoll aufliegen, eine Kraft überträgt, die auf die Knochenstrukturen ausgerichtet ist, die die Wurzeln aufnehmen, womit eine Erweiterung des Gaumens stimuliert wird, jedoch können die geneigten Ebenen auch einzeln entfernt werden, so dass nur in einigen Fällen eine lokalisierte und individuelle Erweiterung je nach den Bedürfnissen des klinischen Falles hervorgerufen wird.

6. Kombination gemäß Patentanspruch 1, **dadurch gekennzeichnet, dass** die geneigten Ebenen (7a, 7b und 7c) in Kombination mit den in den Ausrichtern vorhandenen sektoriellen Verstärkungen (12) wirken und ein einziges Ganzes hinsichtlich der Richtung der Kräfte zur Rückbildung des Gaumens und Zahnverschiebungen bilden.

7. Kombination gemäß Patentanspruch 1, **dadurch gekennzeichnet, dass** sich die bereichsweise geneigten Ebenen (7) in ihren Nähten (sagittal, interinzisiv und kreuzförmig) sich funktionell mit der Anatomie des Gaumens verbinden und die Nähte den in den Ausrichtern vorhandenen Verstärkungen (12) entsprechen (10), die nach dem gleichen Schema angeordnet sind, sodass die geneigten Ebenen (7) beim Zusammendrücken der Zahnbögen durch den Patienten die Kraft auf den Ausrichter (10) übertragen, der zusammen mit den Sektorverstärkungen (12) auf die Beweglichkeit bestimmter Sektoren einwirkt und einen Schub von den Ebenen (7) erfährt, der es ermöglicht, eine absolut individuelle und wirksame Behandlung zu erzielen, die auf spezifische Weise für jeden Patienten durchgeführt wird.

8. Kombination gemäß Patentanspruch 1, **dadurch gekennzeichnet, dass** die genannte Rippe (9) eine Höhe von etwa 0,5 bis 0,8 mm aufweist, um den Zahnkontakt nicht zu beeinträchtigen, aber dennoch ausreichend ist, um zwischen die beiden mittleren Schneidezähne zu passen, die im Allgemeinen eine Nut an der Inzisalkante zwischen einander aufweisen.

9. Kombination gemäß Patentanspruch 1, **dadurch gekennzeichnet, dass** das Gemisch, aus der das Vorrichtung besteht, eine Härte speziell für
die funktionelle Wiederherstellung der Kau- und Schädelbasismuskulatur entwickelte und kalibrierte Härte besitzt und eine vollständige und gleichmäßige Muskelkontraktion ermöglicht, ohne dabei weder zu weich, noch zu hart zu sein.

10. Kombination gemäß Patentanspruch 1, **dadurch gekennzeichnet, dass** der genannte Ausrichter (10) aufweist:
- Zungenstifte (11), die dazu bestimmt sind, in die in der Vorrichtung vorhandenen Aussparungen (6) zur Verbindung zu greifen, wobei die Zungenstifte (11) aus kleinen Vorsprüngen bestehen, die in einer vorher festgelegten Position angeordnet sind, d. h. hinter und seitlich der Interinzisivpapille, deren Aufgabe es ist, in Kombination mit dem Zungenheber (50), der auf diese Stifte ausgerichtete Rillen (52) aufweist, die Zunge in einen physiologischen Funktionsweg zurückzuführen, um sie für die gesamte Dauer der Behandlung wieder zu üben, was 12 bis 24 Monate dauern kann, da das Aufliegen auf dem Gaumen dazu beiträgt, ihn wieder richtig zu formen, da die Zungenwirkung eine Anpassung auf den Gaumen ausübt, die durch eine Veränderung der Gaumenform vorgenommen wird;
- sektorielle Verstärkungen (12), bei denen es sich um Erweiterungen/Verlängerungen handelt, die aus dem gleichen Material wie der Ausrichter bestehen, entsprechend den Schädelnähten angeordnet sind und dazu dienen, Skelettanpassungen zu stimulieren, die in Verbindung mit der ortodontischen Vorrichtung eine einfache und physiologische Wiederherstellung der Form des Gaumens ermöglichen.

11. Kombination gemäß Patentanspruch 1, **dadurch gekennzeichnet, dass** der vordere (4) und Gaumenschutz (40) im oberen Teil und der Vestibulärschutz (3) im unteren Teil die Ausdehnung der Kiefer begünstigen und die Kontrolle des Verhältnisses zum Unterkiefer ermöglichen, damit eine korrekte Querabmessung zwischen Ober- und Unterkiefer gewährleistet ist, da die Ausdehnung des Oberkiefers proportional zum kranialen Schema und der Unterkiefergröße des Patienten stehen muss, während der vestibuläre Schutz (3) im unteren Bereich eine Begrenzung der Bewegung des unteren Zahnbogens ermöglicht.

## Revendications

1. Combinaison d'un dispositif orthodontique pour les adaptations crâniennes et d'un aligneur pour fonctionner en combinaison avec ledit dispositif orthodontique, où le dispositif orthodontique est prévu pour être réparti entre deux arcades dentaires d'un patient et comprend :
- un élément en U ayant supérieurement un siège (2) pour accueillir l'arcade dentaire concernée par la thérapie,
- de l'autre côté du siège (2) de chaque côté de l'U un bouclier vestibulaire (3) inférieur prévu pour s'engager à l'extérieur de l'arcade dentaire non concernée par la thérapie, et prévu pour contenir l'arcade inférieure,
- centralement un bouclier frontal (4) prédisposé à aller en appui contre les dents incisives,
**caractérisé par le fait que** ledit dispositif comprend :
- un bouclier palatal (40) dans la partie supérieure de chaque côté de l'U apte à renforcer la poussée que le patient exerce tout en contractant la musculature et à permettre d'élargir les maxillaires, en élargissant l'arcade supérieure,
- un bouclier lingual (5) supérieur placé à l'intérieur en correspondance du centre de l'U et équipé centralement d'une rampe linguale (50) prévue pour amener la langue à se maintenir dans une zone spécifique bien définie, au niveau des dents incisives, et délimitée d'un côté par le dispositif et de l'autre par des broches (11) linguales présentes dans l'aligneur (10) que le patient doit porter,
- une crête médiane (9) qui permet l'engagement précis entre l'aligneur (10) et le dispositif lui-même,
- une série de plans inclinés sectoriels (7) alloués à l'intérieur du siège (2) et placés respectivement au niveau des dents prémolaires pour le premier plan (7a), des dents molaires pour le deuxième plan de (7b) et du troisième plan (7c) est prévue à proximité de l'extrémité libre de l'U, lesdits plans inclinés faisant saillie de la base du siège (2) et présentant une section essentiellement trapézoïdale avec le côté orienté vers l'extérieur légèrement arqué prédisposé pour aller en appui contre la partie interne de la joue, lesdits plans inclinés (7) étant trois de chaque côté et étant individuellement amovibles pour obtenir un dispositif fonctionnel fortement personnalisable.

2. Combinaison selon la revendication 1, **caractérisée en ce que** ledit dispositif comprend au moins une paire de coupes adaptatrices (15) à section cunéiforme qui permettent une manutention latérale en élargissement de l'U en offrant une adaptation dimensionnelle optimale en sens transversal aux différentes arcades de différentes mesures pour rendre la mesure du dispositif pratiquement presque « universelle ».

3. Combinaison selon la revendication 1, **caractérisée en ce que** ledit dispositif comprend une poche porte-puce (8) en matériau élastique réalisée dans l'épaisseur du dispositif lui-même qui est prévue pour accueillir une micropuce (80) équipée d'un capteur thermique qui permettra la compliance du patient et fournira des données utiles au suivi du traitement.

4. Combinaison selon la revendication 1, **caractérisée en ce que** ladite rampe linguale (50) présente :
- une partie inférieure (51) légèrement incurvée vers la partie interne de la bouche afin d'inviter la langue à monter,
- de petites nervures (52), dites rides palatales, qui se trouvent au niveau des incisives supérieures,
- deux rainures verticales (53) aptes à guider le parcours d'élévation de la langue, et
- une marge supérieure avec une conformation à double creux (6) qui interagit avec les broches linguales (11) de l'aligneur (10).

5. Combinaison selon la revendication 1, **caractérisée en ce que** lesdits plans inclinés sectoriels (7a, 7b et 7c) sont disposés de manière préétablie et stratégique afin de pouvoir personnaliser, au cas par cas, les zones qui devront donner de la force aux mouvements dentaires et squelettiques que l'on veut imprimer à la thérapie, puisqu'un plan incliné sur lequel les arcades s'appuient avec force pendant le serrement transmet une force orientée vers les structures osseuses qui accueillent les racines afin de permettre la stimulation à l'expansion du palais, mais sont amovibles individuellement de sorte que seuls quelques-uns d'entre eux induisent une expansion localisée et individualisée, selon les besoins du cas clinique.

6. Combinaison selon la revendication 1, **caractérisée en ce que** lesdits plans inclinés (7a, 7b et 7c) agissent en combinaison avec des renforts sectoriels (12) présents dans les aligneurs créant un tout en ce qui concerne la direction des forces de reconformation du palais et de déplacement dentaire.

7. Combinaison selon la revendication 1, **caractérisée en ce que** lesdits plans inclinés sectoriels (7) se connectent fonctionnellement à l'anatomie du palais dans ses sutures : sagittale, interincisive et cruciforme et lesdites sutures correspondent aux renforts (12) présents dans les aligneurs (10) qui sont disposés selon le même schéma ; ainsi, lorsque le patient serre les arcades, les plans inclinés (7) transmettent la force à l'aligneur (10), qui, avec les renforts sectoriels (12), interagit sur la mobilité de certains secteurs et reçoit une poussée des plans (7) permettant d'obtenir une thérapie absolument individuelle et efficace et gérée de manière personnalisée pour chaque patient.

8. Combinaison selon la revendication 1, **caractérisée en ce que** ladite crête (9) présente une hauteur d'environ 0,5-0,8 mm afin de ne pas altérer le contact dentaire, mais est néanmoins suffisante pour s'insérer entre les deux incisives centrales qui présentent généralement une rainure entre elles au niveau de la marge incisive.

9. Combinaison selon la revendication 1, **caractérisée en ce que** le mélange qui compose le dispositif a une dureté spécialement étudiée et calibrée pour rééduquer fonctionnellement les muscles masticateurs et basicrâniens et permet une contraction musculaire complète et équilibrée, sans être ni trop douce ni trop dure.

10. Combinaison selon la revendication 1, **caractérisée en ce que** ledit aligneur (10) présente :
- des broches linguales (11) prévues pour s'engager dans les creux de connexion (6) présents dans l'appareil, lesdites broches linguales (11) étant constituées de petites extractions placées dans une position prédéterminée, c'est-à-dire derrière et sur le côté de la papille interincisive, dont la tâche est de rappeler, en combinaison avec l'élévateur lingual (50) qui présente les rainures (52) dirigées vers les
broches elles-mêmes, la langue vers un parcours fonctionnel physiologique afin de la rééduquer pendant toute la durée du traitement qui peut durer de 12 à 24 mois, car en s'appuyant sur le palais, elle contribue à le reconformer correctement puisque l'action linguistique exerce une action conformante du palais qui est mise en oeuvre en modifiant la forme palatale,
- des renforts sectoriels (12) qui sont des agrandissements/extensions réalisés avec le même matériau que l'aligneur, sont disposés selon les sutures crâniennes et sont prévus pour stimuler les adaptations squelettiques permettant, en association avec le dispositif orthodontique, une reconfiguration facile et physiologique de la forme du palais.

11. Combinaison selon la revendication 1, **caractérisée en ce que** lesdits boucliers frontal (4) et palatal (40) dans la partie supérieure et vestibulaire (3) dans la partie inférieure, favorisent l'expansion des mâchoires et permettent de contrôler le rapport avec l'arcade inférieure pour une dimension transversale correcte entre les mâchoires et la mâchoire car l'expansion des mâchoires doit être proportionnelle au schéma crânien et à la taille mandibulaire du patient tandis que, en dessous, les boucliers vestibulaires (3) permettent de contenir l'arcade inférieure.
